# EUROPEAN PATENT SPECIFICATION

(11) **EP 2 814 761 B1**
(45) Date of publication and mention of the grant of the patent: **20.07.2016**
(21) Application number: 13706288.1
(22) Date of filing: 06.02.2013
(51) Int. Cl.: B65D 17/00, B65D 81/24, B65D 81/34, B65D 51/18

(54) **PACKAGING CONTAINER, LAMINATED FILM MATERIAL**
VERPACKUNGSBEHÄLTER, LAMINIERTES FILMMATERIAL
RÉCIPIENT D'EMBALLAGE, FILM LAMINÉ

(30) Priority: 17.02.2012 GB 201202792
(43) Date of publication of application: 24.12.2014
(73) Proprietor: HH Associates Limited, Sutton, Surrey SM1 2AE (GB)
(72) Inventor: SHELDON, David, Belper Derbyshire DE56 1HJ (GB)
(74) Representative: Higgs, Jonathan
(86) International application number: PCT/GB2013/050266
(87) International publication number: WO 2013/121176

(56) References cited:
- EP-A2- 1 384 577
- WO-A1-99/58329
- US-A- 4 438 850
- US-A1- 2003 192 893

## Description

The present invention relates to a packaging container for a food product, a packaged food product, and a laminated film material for sealing a packaging container for a food product.

Pre-prepared food products such as chilled or frozen ready meals and ambient foods are often packaged in containers in which they can be heated to a serving temperature in a conventional oven or a microwave oven. Typically, the packaging container includes a tray that is made of a moulded plastics material for example crystalline polyethylene terephthalate (CPET) or polypropylene (PP), or of aluminium foil, and a film lid that is sealed to the tray. The lid is usually made of a transparent plastics film such as polyester (PET) or polypropylene.

Usually the film lid is left attached to the tray during heating to protect the food against discolouring and/or drying out, but it is punctured to allow steam to escape without building up excess pressure. The lid is unprinted to avoid the risk of ink migrating to the food. After heating, the film lid is removed and the food is served.

The packaging container is often delivered in a cardboard carton or box, which encloses the filled tray. The carton generally carries printed information, which may include for example a photograph of the product, the name of the product and of the manufacturer, trade marks, product codes for example in the form of bar codes, the weight of the product, nutritional information, a list of ingredients and cooking or preparation instructions. The carton therefore carries a lot of essential information about the product. It also helps to protect the tray and lid from damage during transportation and storage, and protects the food product from exposure to light. The carton is removed prior to heating the product.

In some cases, the cardboard carton is replaced by a simple cardboard sleeve that is wrapped around the tray, leaving its ends exposed. The sleeve serves the same purpose as the carton, carrying the essential information about the product and protecting the tray and the film lid from damage. The sleeve also protects the food product from exposure to light. Less material is required to produce the sleeve, thus providing cost savings and reducing the packaging weight as compared to a carton-packaged container.

Published patent specifications US4438850, EP1384577, WO99/58329 and US2003/192893 relate to various containers with membranes but do not describe an improved packaging container with the total combination of features and advantages according to the invention.

It is an object of the present invention to provide an improved packaging container for food products, and an improved packaged food product.

According to one aspect of the present invention there is provided a packaging container for a food product according to claim 1. The packaging container comprises a tray for receiving a food product, the tray having a base and a peripheral wall, and a film lid for sealed attachment to an upper edge of the peripheral wall to seal a food product within the container, wherein the film lid comprises a laminated film material that includes a lower film layer made of a first plastics material for sealed attachment to the upper edge of the peripheral wall and an upper film layer made of a second plastics material that is attached by a peelable layer to the lower film layer so that it can be separated by peeling from the lower film layer, said upper film layer carrying at least one printed layer.

The upper film layer can carry in the printed layer all essential product information. It also helps to protect the food product from exposure to light. However, it can be removed by peeling prior to heating a product, leaving only the lower film layer attached to the tray. The lower film layer can then be punctured (if required) and the food product can be heated in the usual way. Removing the upper film layer ensures that the printed information is available to the user during heating. The upper film layer also helps to strengthen the film lid and protect it from damage during transportation and storage.

By providing all the printed information on the upper film layer, the previously required cardboard sleeve can be omitted, leading to a saving in cost and in the packaging weight.

Typically, the packing cost will be reduced by approximately 12% and the packaging weight by approximately 8g per unit.

Advantageously, the peelable layer comprises a pressure sensitive adhesive. This adhesive should be formulated to meet Regulation (EC) 1935/2004 and Directive 2007/19/EC; it should also meet EC Plastic Directive 2011/10/EC covering articles intended to come into contact with food.

The adhesive is preferably formulated to create a bond at an application weight of 1.6g/m² to 2.5g/m² when the adhesive layer covers 100% of the film area. The weight of the adhesive layer can be altered in this range to weaken and/or strengthen the bond as required.

Alternatively, any other attachment process that allows the upper film layer to be separated by peeling from the lower film layer may be used. For example, the upper film layer may be attached to the lower film layer by peelable layer of a co-extruded polymer material.

Advantageously, the peelable layer is attached more strongly to the upper film layer than to the lower film layer, so that it is removed entirely from the lower film layer when the upper film layer is peeled away. This ensures that there is no possibility of material from the peelable layer migrating into the food product during heating. The peelable layer preferably has a bond strength with the lower film layer in the range 20-90g per 25mm width, more preferably approximately 30g per 25mm width. The bond strength is tested using a peel test that involves cutting a 25mm wide strip of the laminated film and separating the film layers at one end of the strip, then measuring the force needed to pull the laminations apart. Most conventional adhesives typically have a bond strength in the range 650g to 850g per 25mm width. The peelable layer of the present invention therefore has a very low bond strength, which allows the upper film layer to be peeled manually from the container by a customer to reveal cooking and nutritional information.

The lower film layer is preferably made of a PET homopolymer material. Preferably, the lower film layer includes an upper surface layer comprising a heat sealable copolymer material that allows easy peeling of the upper film layer. The lower film layer is preferably heat sealed to the upper edge of the peripheral wall. A lower surface of the lower film layer is preferably corona treated so that it forms a strong bond with the wall.

The lower film layer preferably has good barrier properties, which are essential for food products that are intended to be kept in ambient and chilled environments, with a water transmission rate of no more than approximately 20g/m² per day and an oxygen transmission rate of no more than 60cm³/m² per day.

Advantageously, the upper film layer is made of a polyester material. Preferably, a lower surface of the upper film layer is acrylic treated to ensure strong adhesion to the peelable layer. The upper film layer preferably has a thickness in the range 20-30µm, more preferably approximately 23µm. This ensures that the upper film layer does not curl when peeled from the lower film layer.

The laminated film material preferably has freezable properties so that it can be stored at a temperature of -45C without deterioration.

Advantageously, the upper film layer carries a first printed layer that can be viewed from a first side of the upper film layer and a second printed layer that can be viewed from a second side of the upper film layer. Thus, the upper side of the upper film layer may carry a photograph of the product, the product name and the manufacturer's name and trade mark, whereas the lower side of the upper film layer, which is only visible when the film is peeled away from the lower film layer, may include nutritional information and cooking or preparation instructions. By providing two printed layers the amount of information that can be carried by the upper film layer can be doubled.

In one embodiment, the first printed layer is printed on the first side of the upper film layer and the second printed layer is printed on the second side of the upper film layer. Both sides of the upper film layer therefore carry printed information.

In an alternative embodiment, the upper film layer is transparent and the first and second printed layers are printed on the same side of the upper film layer, whereby one of the printed layers can be viewed through the transparent film from a first side of the upper film layer, and the other printed layer can be viewed from the second side of the upper film layer. Preferably one of the printed layers is over-printed with the other printed layer.

In this embodiment, both printed layers are provided on the same side of the film but the first printed layer is over-printed with the second printed layer. Therefore, the first printed layer can be seen through the transparent film whereas the second printed layer can be seen by turning the film over to reveal the reverse side. The printed side of the upper film layer can be either the upper side or the lower side of the film.

Advantageously, at least one of the printed layers is substantially opaque, to protect the food product from exposure to light.

Advantageously, the lower film layer is transparent and preferably unprinted, allowing the food product to be seen before heating.

The lower film layer is preferably made of a heat resistant polyester material.

Advantageously, the tray is made of a plastics material, preferably a heat resistant plastic material such as a CPET material or a polypropylene material. Alternatively it may be made of any other suitable material, for example aluminium foil.

According to another aspect of the invention there is provided a packaged food product comprising a packaging container according to any one of the preceding statements of invention and a food product sealed within the container.

The food product may be a pre-prepared food product, preferably a chilled or frozen food product or an ambient food product, which is intended to be heated to a serving temperature in the packaging container.

According to another aspect of the invention there is provided a laminated film material for sealing a packaging container according to claim 14. The laminated film material includes a lower film layer made of a first plastics material for sealed attachment to the packaging container and an upper film layer made of a second plastics material that is attached to the lower film layer by a peelable layer so that it can be separated by peeling from the lower film layer, said upper film layer carrying at least one printed layer.

In a preferred embodiment, the plastics films making up the upper and lower layers of the laminated film material are selected and treated to ensure the construction works in the following way: the upper layer when peeled carries with it all the pressure sensitive adhesive so that no adhesive is left on the lower film layer. This is achieved by using an acrylic coated material. For this to be suitable to work in a manufacturing environment, the adhesive covers 100% of the film area. In addition, the upper film layer has a thickness of approximately 23 micron to ensure the film does not curl back on itself when peeling, which would make reading the nutritional and cooking instructions difficult. The lower film layer is also a specially treated film, one side being corona treated to give it extra bonding properties to the base tray so that it doesn't come away when the upper layer is peeled, and the other side of this base layer film is treated with a copolymer to allow the peelable layer to stick to it. The lower film layer is preferably self-venting when heated in a microwave or conventional oven.

Preferably, the thickness of the upper film layer is approximately 23 micron and the thickness of the lower film layer is approximately 25 micron, these thicknesses ensuring functionality of the construction.

Even with these film properties the adhesive which covers 100% must have easy peel characteristics whilst still maintaining a bond at an application weight of approximately 1.6g/m² to 2.5g/m².

The film of the present invention does not require any perforations or laser cutting to generate the required peelability, which is achieved purely by the selected combination of films and and adhesive that has an extremely low bond strength to allow manual peeling.

Various embodiments of the present invention will now be described by way of example with reference to the accompanying drawings, wherein:
Figure 1 is an isometric view of a packing container for a food product comprising a tray with a film lid;
Figure 2 is a top plan view of a packing container having a film lid comprising upper and lower film layers;
Figure 3 is a sectional side view of a film lid;
Figure 4 is a sectional side view of a lower film layer;
Figure 5 is a sectional side view of an upper film layer;
Figure 6 is a sectional side view of the upper film layer, showing the positions of two printed layers according to a first embodiment of the invention, and
Figure 7 is a sectional side view of the upper film layer, showing the positions of two printed layers according to a second embodiment of the invention.

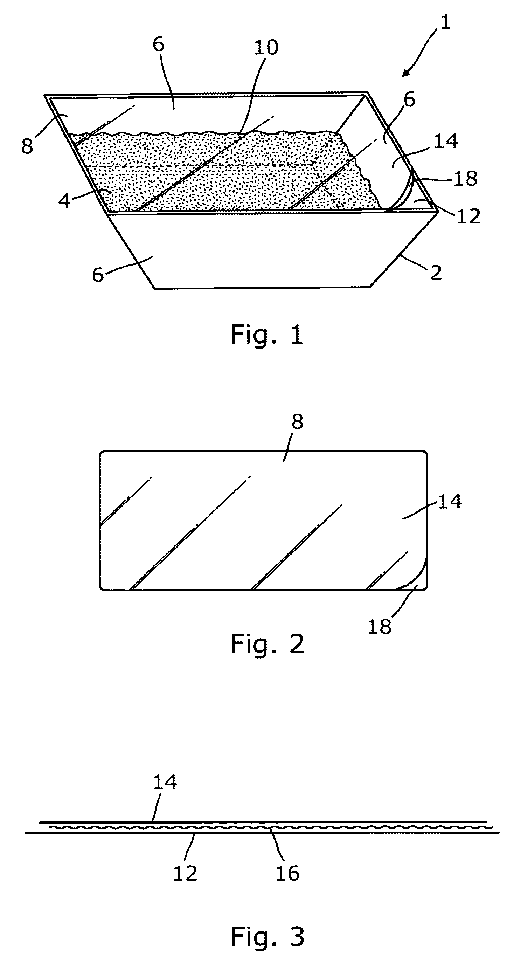

As shown in Figures 1 and 2, the packaging container 1 includes a tray 2 having a base 4 and a peripheral wall 6. A film lid 8 is sealed to the upper edge of the peripheral wall 6 to seal a food product 10 within the container 1.

As shown more clearly in Figure 3, the film lid 8 has a laminated structure comprising a lower film layer 12 that is attached (for example by heat-sealing) to the upper edge of the peripheral wall 6, and an upper film layer 14 that is peelably attached to the lower film layer 12, for example by a peelable layer 16 of peelable adhesive that covers substantially 100% of the film area. Optionally, the peelable layer 16 may be omitted in one corner of the film lid so that the unadhered comer of the upper film layer 14 provides a tab 18 that can be grasped, allowing the upper film layer 14 to be peeled easily from the lower film layer 12.

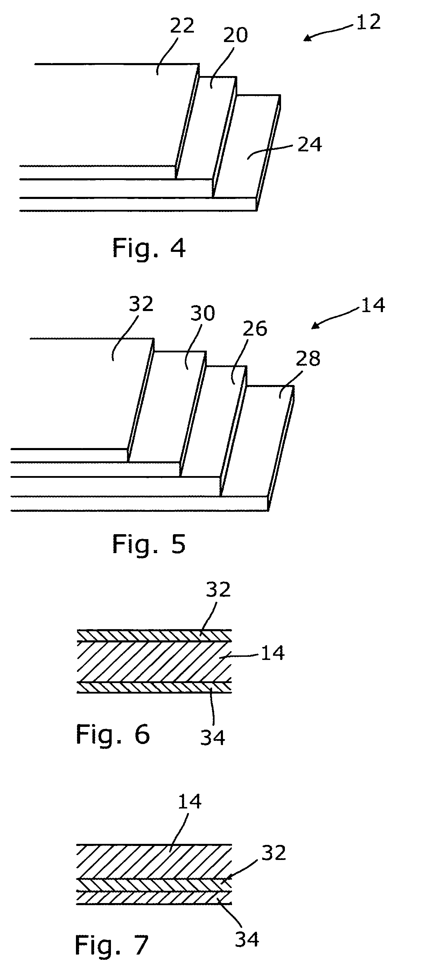

As shown in Fig. 4, the lower film layer 12 may for example be a co-extruded film comprising a core layer 20 made of a PET homopolymer material, has an upper surface layer 22 comprising a heat sealable copolymer material for low peel strength, and a lower surface layer 24 that is corona treated to allow it to be heat sealed strongly to the upper edge of the peripheral wall 6. A suitable material is for example the Easy Peel 10.63CT, 25my thermosealable PET film sold by Transparent Paper Ltd of Zurich. The lower film layer 12 preferably has a thickness in the range 20-30µm, more preferably approximately 25µm.

As shown in Fig. 5, the upper film layer 14 may be made for example be a co-extruded film comprising a core layer 26 of a polyester material with conventional upper and lower surface layers 28, 30, wherein the lower surface layer 30 has an acrylic surface treatment 32 for improved adhesion of solvent-based inks and adhesives. The upper film layer 14 preferably has a thickness in the range 20-30µm, more preferably approximately 23µm. A suitable material is for example the Sarafil Polyplex (RTM) type S42 23my polyester film sold by Transparent Paper Ltd of Zurich.

The upper film layer 14 is printed with at least one printed layer that carries essential information about the food product 10. Preferably, the upper film layer 14 is printed with two printed layers carrying information about the food product 10.

In a first embodiment as shown in Figure 6, the upper film layer 14 carries a first printed layer 34 on the upper side of the upper film layer 14, and a second printed layer 36 on the lower side of the upper film layer. The first printed layer 34 can therefore be seen on the upper side of the upper film layer and the second printed layer 36 can be seen on the lower side of the upper film layer. The second printed layer 36 cannot be seen until the upper film layer 14 is peeled away from the lower film layer 12. Typically, the upper printed layer 34 will include printed information such as a photograph of the product, the name of the product, the name and trade mark of the manufacturer and the weight of the product, whereas the lower printed layer 36 will carry printed information such as nutritional information about the food product and cooking or preparation instructions. The upper film layer 14 has a construction to ensure that it does not curl when peeled from the lower film layer 12, as this would make it difficult to read the printed information.

In a second embodiment shown in Figure 7, the upper and lower printed layers 34,36 are both printed on the lower side of the upper film layer 14. More specifically, the upper printed layer 34 is printed on the lower side of the upper film layer 14, and the upper printed layer 34 is then overprinted with the lower printed layer 36. The upper printed layer 34 can be viewed through the transparent film of the upper film layer 14 and the lower printed layer 36 can be seen when the upper film layer 14 is peeled away from the lower film layer 12.

The arrangement shown in Figure 7 can of course be reversed: that is to say, the upper and lower printed layers 34, 36 can instead be printed onto the upper side of the upper film layer 14.

In order to prepare the food product for serving, the upper film layer 14 is peeled away together with the peelable layer 16 to expose the transparent lower film layer 12. Normally, this lower film layer 12 will then be punctured to allow steam to vent from the container during heating. Alternatively, the lower film layer 12 may be self-venting or may be provided with one or more pre-formed vents which open when the upper film layer 14 is removed, or with a steam pressure valve. However, as a safety precaution it may still be advisable to puncture the lower film layer 12. The food product is then heated by placing the tray with the still attached lower film layer 12 in either a conventional oven or a microwave oven, and heating for an appropriate time. After heating has been completed, the lower film layer 12 is either peeled or cut away, allowing the food product 10 to be served.

The lower and upper film layers 12, 14 may be made of any suitable plastics material, for example a polyester material or a polypropylene material, or any suitable alternative, providing that they are of sufficient thickness as described above. However, at least the lower film layer must be made of a heat-resistant plastics material that can tolerate a temperature of about 130-210C, and which is preferably transparent with a low haze value for example of no more than about 7%, allowing the food to be viewed before cooking. Preferably, the laminated film lid 8 has sufficient strength to support a weight of at least 3.5kg, so that a number of similar filled containers can be stacked in a retail display cabinet.

The plastic film material forming the film lid 8 is preferably supplied to the food manufacturing/packaging company in either reel or sheet form as a single laminated film comprising the heat-resistant lower film layer 12, the peelable layer 16 and the printed upper film layer 14. The film material is then applied to the filled trays using a conventional sealing process, for example by heat sealing or ultrasonic welding. However, it is possible to supply the upper and lower film layers separately and laminate the two film layers 12, 14 and the peelable layer 16 together either prior to, during or after sealing the film to the filled tray.

The tray 2 is typically made of a plastics material, preferably a CPET material or a polypropylene material. Alternatively, it may be made of aluminium foil.

Various modifications of the invention are of course possible. For example, the tray 2 may have any suitable shape, such as square, rectangular, circular or an irregular shape. It may also be divided into separate compartments for different food products.

The peelable layer 16 of adhesive between the upper and lower film layers 12, 14 may be replaced by a co-extruded layer of a peelable polymer material, providing that the laminated film material has the required peeling characteristics.

The laminated film lid 8 may optionally include a third film layer, so that it comprises two lower layers of a transparent film material and an upper printed film layer, for use in sterilisation (retort) applications. In this application the top two layers of film are laminated together using a retort adhesive and these film layers are subsequently laminated to the base layer using a suitable pressure sensitive adhesive or other peelable layer.

The food product may be a chilled or frozen food product, or an ambient food product, which is intended to be heated to a serving temperature in the packaging container.

## Claims

1. A packaging container for a food product (10), the packaging container being configured to allow heating of the food product (10) in the packaging container to a serving temperature and comprising a tray (2) for receiving a food product, the tray having a base (4) and a peripheral wall (6), and a film lid (8) for sealed attachment to an upper edge of the peripheral wall (6) to seal a food product (10) within the container, wherein the film lid (8) comprises a laminated film material that includes a lower film layer (12) made of a first plastics material for sealed attachment to the upper edge of the peripheral wall and an upper film layer (14) made of a second plastics material that is attached by a peelable layer (16) to the lower film layer (12) so that it can be separated by peeling from the lower film layer (12), said upper film layer (14) carrying at least one printed layer and said lower film layer (12) being unprinted allowing the food product to be seen before heating, wherein the first plastics material comprises a heat resistant plastics material that can tolerate a temperature of about 130-210°C, and the peelable layer (16) is attached more strongly to the upper film layer (14) than to the lower film layer so that it is removed entirely from the lower film layer (12) when the upper film layer (14) is separated by peeling from the lower film layer.

2. A packaging container according to claim 1, wherein the peelable layer (16) comprises a pressure sensitive adhesive.

3. A packaging container according to any one of the preceding claims, wherein the peelable layer (16) has a bond strength with the lower film layer in the range 20-90g per 25mm width, preferably approximately 30g per 25mm width.

4. A packaging container according to any one of the preceding claims, wherein the lower film layer (12) is made of a PET homopolymer material.

5. A packaging container according to any one of the preceding claims, wherein the lower film layer (12) includes an upper surface layer (22) comprising a heat sealable copolymer material.

6. A packaging container according to any one of the preceding claims, wherein the lower film layer (12) is heat sealed to the upper edge of the peripheral wall (16).

7. A packaging container according to any one of the preceding claims, wherein a lower surface of the lower film layer (12) is corona treated.

8. A packaging container according to any one of the preceding claims, wherein the upper film layer (14) is made of a polyester material.

9. A packaging container according to any one of the preceding claims, wherein a lower surface (30) of the upper film layer (14) is acrylic treated.

10. A packaging container according to any one of the preceding claims, wherein the upper film layer (14) has a thickness in the range 20-30µm, preferably approximately 23µm.

11. A packaging container according to any one of the preceding claims, wherein the upper film layer (14) carries a first printed layer that can be viewed from a first side of the upper film layer and a second printed layer that can be viewed from a second side of the upper film layer.

12. A packaging container according to any one of the preceding claims, wherein the tray (2) is made of a plastics material, preferably a CPET material or a polypropylene material.

13. A packaged food product comprising a packaging container according to any one of the preceding claims and a food product (10) sealed within the container.

14. A laminated film material for sealing a packaging container for a food product (10) that is configured to allow heating of the food product in the packaging container to a serving temperature, wherein the laminated film material includes a lower film layer (12) made of a first plastics material for sealed attachment to the packaging container and an upper film layer (14) made of a second plastics material that is attached by a layer (16) of peelable adhesive to the lower film layer (12) so that it can be separated by peeling from the lower film layer, said upper film layer (14) carrying at least one printed layer and said lower film layer being unprinted allowing the food product to be seen before heating, wherein the first plastics material comprises a heat resistant plastics material that can tolerate a temperature of about 130-210°C, and the peelable layer (16) is attached more strongly to the upper film layer (14) than to the lower film layer (12) so that it is removed entirely from the lower film layer when the upper film layer is separated by peeling from the lower film layer (12).

## Patentansprüche

1. Verpackungsbehälter für ein Lebensmittelprodukt (10), wobei der Verpackungsbehälter ausgelegt ist, um Erhitzen des Lebensmittelprodukts (10) im Verpackungsbehälter auf eine Serviertemperatur zu erlauben, und beinhaltet: eine Schale (2) zum Aufnehmen eines Lebensmittelprodukts, wobei die Schale eine Basis (4) und eine periphere Wand (6) aufweist, und einen Foliendeckel (8) für die versiegelte Anbringung an eine obere Kante der peripheren Wand (6), um ein Lebensmittelprodukt (10) innerhalb des Behälters zu versiegeln, wobei der Foliendeckel (8) ein laminiertes Folienmaterial beinhaltet, das eine untere Folienlage (12), gefertigt aus einem ersten Kunststoffmaterial für die versiegelte Anbringung an die obere Kante der peripheren Wand, und eine obere Folienlage (14), gefertigt aus einem zweiten Kunststoffmaterial, das durch eine abziehbare Lage (16) an die untere Folienlage (12) angebracht ist, so dass sie durch Abziehen von der unteren Folienlage (12) getrennt werden kann, einschließt, wobei die obere Folienlage (14) mindestens eine bedruckte Lage trägt und die untere Folienlage (12) unbedruckt ist, wodurch ermöglicht wird, dass das Lebensmittelprodukt vor dem Erhitzen gesehen werden kann, wobei das erste Kunststoffmaterial ein hitzebeständiges Kunststoffmaterial beinhaltet, das eine Temperatur von etwa 130-210 °C tolerieren kann, und die abziehbare Lage (16) stärker an die obere Folienlage (14) als an die untere Folienlage angebracht ist, so dass sie gänzlich von der unteren Folienlage (12) entfernt werden kann, wenn die obere Folienlage (14) durch Abziehen von der unteren Folienlage getrennt wird.

2. Verpackungsbehälter gemäß Anspruch 1, wobei die abziehbare Lage (16) einen Haftklebstoff beinhaltet.

3. Verpackungsbehälter gemäß einem der vorhergehenden Ansprüche, wobei die abziehbare Lage (16) eine Bondstärke mit der unteren Folienlage im Bereich von 20-90 g per 25 mm Breite, vorzugsweise ungefähr 30 g per 25 mm Breite, aufweist.

4. Verpackungsbehälter gemäß einem der vorhergehenden Ansprüche, wobei die untere Folienlage (12) aus einem PET-Homopolymer-Material gefertigt ist.

5. Verpackungsbehälter gemäß einem der vorhergehenden Ansprüche, wobei die untere Folienlage (12) eine obere Oberflächenlage (22) einschließt, die ein heißsiegelfähiges Copolymermaterial beinhaltet.

6. Verpackungsbehälter gemäß einem der vorhergehenden Ansprüche, wobei die untere Folienlage (12) mit der oberen Kante der peripheren Wand (16[A1]) hitzeversiegelt ist.

7. Verpackungsbehälter gemäß einem der vorhergehenden Ansprüche, wobei eine untere Oberfläche der unteren Folienlage (12) coronabehandelt ist.

8. Verpackungsbehälter gemäß einem der vorhergehenden Ansprüche, wobei die obere Folienlage (14) aus einem Polyestermaterial gefertigt ist.

9. Verpackungsbehälter gemäß einem der vorhergehenden Ansprüche, wobei eine untere Oberfläche (30) der oberen Folienlage (14) acrylbehandelt ist.

10. Verpackungsbehälter gemäß einem der vorhergehenden Ansprüche, wobei die obere Folienlage (14) eine Dicke im Bereich von 20-30 µm, vorzugsweise ungefähr 23 µm, aufweist.

11. Verpackungsbehälter gemäß einem der vorhergehenden Ansprüche, wobei die obere Folienlage (14) eine erste bedruckte Lage, die von einer ersten Seite der oberen Folienlage betrachtet werden kann, und eine zweite bedruckte Lage, die von einer zweiten Seite der oberen Folienlage betrachtet werden kann, trägt.

12. Verpackungsbehälter gemäß einem der vorhergehenden Ansprüche, wobei die Schale (2) aus einem Kunststoffmaterial, vorzugsweise einem CPET-Material oder einem Polypropylenmaterial, gefertigt ist.

13. Verpacktes Lebensmittelprodukt, das einen Verpackungsbehälter gemäß einem der vorhergehenden Ansprüche und ein innerhalb des Behälters versiegeltes Lebensmittelprodukt (10) beinhaltet.

14. Ein laminiertes Folienmaterial zum Versiegeln eines Verpackungsbehälters für ein Lebensmittelprodukt (10), das ausgelegt ist, um Erhitzen des Lebensmittelprodukts im Verpackungsbehälter auf eine Serviertemperatur zu erlauben, wobei das laminierte Folienmaterial eine untere Folienlage (12), gefertigt aus einem ersten Kunststoffmaterial für die versiegelte Anbringung an den Verpackungsbehälter, und eine obere Folienlage (14), gefertigt aus einem zweiten Kunststoffmaterial, das durch eine Lage (16) aus abziehbaren Klebstoff an die untere Folienlage (12) angebracht ist, so dass sie durch Abziehen von der unteren Folienlage getrennt werden kann, einschließt, wobei die obere Folienlage (14) mindestens eine bedruckte Lage trägt und die untere Folienlage unbedruckt ist, wodurch ermöglicht wird, dass das Lebensmittelprodukt vor dem Erhitzen gesehen werden kann, wobei das erste Kunststoffmaterial ein hitzebeständiges Kunststoffmaterial beinhaltet, das eine Temperatur von etwa 130-210 °C tolerieren kann, und die abziehbare Lage (16) stärker an die obere Folienlage (14) als an die untere Folienlage (12) angebracht ist, so dass sie gänzlich von der unteren Folienlage entfernt werden kann, wenn die obere Folienlage durch Abziehen von der unteren Folienlage (12) getrennt wird.

## Revendications

1. Contenant d'emballage pour produit alimentaire (10), le contenant d'emballage étant conçu pour permettre le chauffage du produit alimentaire (10) dans le contenant d'emballage à une température de service et comprenant un récipient (2) pour recevoir un produit alimentaire, le récipient ayant un fond (4) et une paroi périphérique (6), et un couvercle en film (8) pouvant être fixé de façon hermétique à un bord supérieur de la paroi périphérique (6) afin de sceller un produit alimentaire (10) à l'intérieur du contenant, dans lequel le couvercle en film (8) comprend une matière de film stratifiée qui inclut une couche de film inférieure (12) faite d'une première matière plastique pouvant être fixée de façon hermétique au bord supérieur de la paroi périphérique et une couche de film supérieure (14) faite d'une deuxième matière plastique qui est fixée, par une couche pelable (16), à la couche de film inférieure (12) de façon à pouvoir être séparée de la couche de film inférieure (12) par pelage, ladite couche de film supérieure (14) portant au moins une couche imprimée et ladite couche de film inférieure (12) étant non imprimée, permettant au produit alimentaire d'être vu avant chauffage, dans lequel la première matière plastique comprend une matière plastique résistante à la chaleur qui peut tolérer une température d'environ 130 à 210 °C, et la couche pelable (16) est fixée plus solidement à la couche de film supérieure (14) qu'à la couche de film inférieure de sorte qu'elle est entièrement retirée de la couche de film inférieure (12) lorsque la couche de film supérieure (14) est séparée de la couche de film inférieure par pelage.

2. Contenant d'emballage selon la revendication 1, dans lequel la couche pelable (16) comprend un adhésif sensible à la pression.

3. Contenant d'emballage selon l'une quelconque des revendications précédentes, dans lequel la couche pelable (16) présente une force d'adhésion avec la couche de film inférieure dans la gamme de 20 à 90 g pour 25 mm de largeur, de préférence d'approximativement 30 g pour 25 mm de largeur.

4. Contenant d'emballage selon l'une quelconque des revendications précédentes, dans lequel la couche de film inférieure (12) est faite d'une matière homopolymère de PET.

5. Contenant d'emballage selon l'une quelconque des revendications précédentes, dans lequel la couche de film inférieure (12) inclut une couche de surface supérieure (22) comprenant une matière copolymère scellable à chaud.

6. Contenant d'emballage selon l'une quelconque des revendications précédentes, dans lequel la couche de film inférieure (12) est scellée à chaud au bord supérieur de la paroi périphérique (16[A1]).

7. Contenant d'emballage selon l'une quelconque des revendications précédentes, dans lequel une surface inférieure de la couche de film inférieure (12) est traitée par décharge corona.

8. Contenant d'emballage selon l'une quelconque des revendications précédentes, dans lequel la couche de film supérieure (14) est faite d'une matière polyester.

9. Contenant d'emballage selon l'une quelconque des revendications précédentes, dans lequel une surface inférieure (30) de la couche de film supérieure (14) est traitée à l'acrylique.

10. Contenant d'emballage selon l'une quelconque des revendications précédentes, dans lequel la couche de film supérieure (14) présente une épaisseur dans la gamme de 20 à 30 µm, de préférence d'approximativement 23 µm.

11. Contenant d'emballage selon l'une quelconque des revendications précédentes, dans lequel la couche de film supérieure (14) porte une première couche imprimée qui peut être vue depuis un premier côté de la couche de film supérieure et une deuxième couche imprimée qui peut être vue depuis un deuxième côté de la couche de film supérieure.

12. Contenant d'emballage selon l'une quelconque des revendications précédentes, dans lequel le récipient (2) est fait d'une matière plastique, de préférence une matière CPET ou une matière polypropylène.

13. Produit alimentaire emballé, comprenant un contenant d'emballage selon l'une quelconque des revendications précédentes et un produit alimentaire (10) scellé à l'intérieur du contenant.

14. Matière de film stratifiée pour sceller un contenant d'emballage pour produit alimentaire (10) qui est conçu pour permettre le chauffage du produit alimentaire dans le contenant d'emballage à une température de service, dans laquelle la matière de film stratifiée inclut une couche de film inférieure (12) faite d'une première matière plastique pouvant être fixée de façon hermétique au contenant d'emballage et une couche de film supérieure (14) faite d'une deuxième matière plastique qui est fixée, par une couche (16) d'adhésif pelable, à la couche de film inférieure (12) de façon à pouvoir être séparée de la couche de film inférieure par pelage, ladite couche de film supérieure (14) portant au moins une couche imprimée et ladite couche de film inférieure étant non imprimée, permettant au produit alimentaire d'être vu avant chauffage, dans laquelle la première matière plastique comprend une matière plastique résistante à la chaleur qui peut tolérer une température d'environ 130 à 210 °C, et la couche pelable (16) est fixée plus solidement à la couche de film supérieure (14) qu'à la couche de film inférieure (12) de sorte qu'elle est entièrement retirée de la couche de film inférieure lorsque la couche de film supérieure est séparée de la couche de film inférieure (12) par pelage.
